# EUROPÄISCHE PATENTANMELDUNG

(11) **EP 1 384 770 A1**
(43) Veröffentlichungstag der Anmeldung: **28.01.2004**
(21) Anmeldenummer: 03025154.0
(22) Anmeldetag: 24.05.1997
(51) Int. Cl.: C11C 5/00

(54) **Verfahren zur Herstellung einer Kerze und Kerze**

(30) Priorität: 19.06.1996 DE 19624454; 23.10.1996 DE 19643719; 27.02.1997 DE 19707909
(62) Teilanmeldung aus: 97923997.7
(71) Anmelder: Sasol Wax GmbH, 20457 Hamburg (DE)
(72) Erfinder: Matzat, Norbert, 22457 Hamburg (DE); Starke, Claus, 02782 Seifhennersdorf (DE); Matthäi, Michael, 24558 Henstedt-Ulzburg (DE)
(74) Vertreter: Müller, Enno, Dipl.-Ing.

(57) **Zusammenfassung**

Die Erfindung betrifft zunächst ein Verfahren zur Herstellung einer Kerze aus einer Kerzengrundmasse auf Paraffinbasis, mit einem Riechstoffanteil. Um technologisch sicher eine gewünscht hohe Riechstoffkonzentration zu erreichen bzw. eine Kerze mit einem hohen Riechstoffanteil anzugeben, schlägt die Erfindung verfahrensmäßig vor, dass zunächst zur Bildung eines Riechstoffkonzentrats ein Riechstoff in einem Lösungsmittel, das einen Ester enthält, gelöst wird, und das so erhaltene Riechstoffkonzentrat seinerseits der Kerzengrundmasse zugegeben wird, in einer Menge, dass der Riechstoff in einem Anteil von 3 bis 35% des Gewichts in der Kerze enthalten ist. Gegenständlich schlägt die Erfindung im Hinblick auf eine Kerze mit einer Kerzengrundmasse auf Paraffinbasis, wobei die Kerze einen Riechstoffanteil aufweist, vor, dass der Anteil an Riechstoff in der Kerze größer als 3 Gewichtsprozent ist und die Kerze einen Anteil an einem Ester und/oder ein Ester-Wachssäuregemisch aufweist.

## Beschreibung

Die Erfindung betrifft zunächst ein Verfahren zur Herstellung einer Kerze aus einer Kerzengrundmasse auf Paraffinbasis, mit einem Riechstoffanteil.

Weiter betrifft die Erfindung eine Kerze auf Paraffinbasis, wobei die Kerze weiter einen Riechstoffanteil aufweist.

Herstellungsverfahren wie vorstehend angegeben und entsprechende Kerzen sind bekannt. Beispielsweise wird dem Paraffin-Grundwerkstoff einer Kerze ein gewünschter Riechstoff, beispielsweise ein ätherisches Öl, beigemischt. Aufgrund einer sehr geringen Löslichkeit solcher Riechstoffe in Paraffin kann aber kaum mehr als eine Konzentration von 2 -3%, bezogen auf das Volumen, in einer solchen Kerze bezüglich Riechstoffen erreicht werden. Darüber hinaus ist die Löslichkeit von Riechstoffen im Paraffin stark temperaturabhängig. Bringt man Riechstoffe in flüssiges Paraffin ein, besteht auch die Gefahr, dass beim Auskristallisieren des Paraffins diese Riechstoffe aus dem Stoffsystem herausgedrückt werden. Die Riechstoffe können sich als öliger Film auf der äußeren Schicht der Kerze abscheiden.

Zur Schaffung eines bestimmten gewünschten Duftes werden bekanntlich in der Regel eine Vielzahl von Riechstoffen als Einzelverbindungen gemischt. Typischerweise werden oft 20 bis 40 einzelne Riechstoffe zu einer bestimmten Duftnote zusammengestellt. Die Mischung erfolgt in einem Lösungsmittel, welches selbst ein Duftstoff sein kann aber auch geruchlos sein kann. Dieses Lösungsmittel wird auch, im Hinblick auf seine bezüglich der einzelnen Duftstoffe fixierende Wirkung, als Fixateur bezeichnet. Die Konzentration in dem Fixateur kann unterschiedlich sein. Im Zusammenhang vorliegender Anmeldung ist auf den Gewichtsanteil der Riechstoffe selbst abgestellt.

Aus der US-PS 5,234,689 ist es für sich bekannt, Riechstoff in einem Ester zu lösen.

Ein erheblicher Anteil an Kerzen wird technologisch im Pressverfahren, Pulverpressverfahren, hergestellt. Hier ist es nur möglich, Riechstoffe einzubringen, indem man einen Paraffinpressling mit einer entsprechenden Tauchschicht, in welcher der Riechstoff eingearbeitet ist, versieht. Auch die Tauchschicht besteht im Wesentlichen aus Paraffin. Hierbei setzt in gleicher Weise die bereits angesprochene geringe Löslichkeit der Riechstoffe in Paraffin die Grenze. Bezogen auf die Gesamtmasse einer solchermaßen hergestellten Kerze kann daher nach diesem Verfahren nur eine sehr geringe Riechstoffkonzentration bzw. ein sehr geringer Riechstoffanteil erreicht werden.

Es ist auch bereits versucht worden, Riechstoffe, die in der Regel als ölige Substanz vorliegen, durch Einsprühen in verfestigtes Paraffinmaterial, nämlich Paraffinpulverteilchen, einzubringen. Bei einem nachfolgenden Pressvorgang ist aber dann die Erscheinung aufgetreten, dass diese flüssigen Riechstoffe beim Pressvorgang als Trennmittel zwischen den einzelnen Paraffinpartikeln wirken und daher keine gewünschten festen Presslinge erreicht werden konnten.

Im Hinblick auf den vorstehend aufgezeigten Stand der Technik beschäftigt sich die Erfindung mit der Aufgabe, ein Verfahren zur Herstellung einer Kerze anzugeben, das technologisch sicher eine gewünscht hohe Riechstoffkonzentration erreichen lässt. Weiter beschäftigt sich die Erfindung auch mit der Aufgabe, eine Kerze mit einem hohen Riechstoffanteil anzugeben.

Diese Aufgabe ist zunächst beim Gegenstand des Anspruches 1 gelöst, wobei verfahrensmäßig darauf angestellt ist, dass zunächst zur Bildung eines Riechstoffkonzentrats ein Riechstoff in einem Lösungsmittel, das einen Ester enthält, gelöst wird und das so erhaltene Riechstoffkonzentrat seinerseits der Kerzengrundmasse zugegeben wird, in einer Menge, dass der Riechstoff in einem Anteil von 3-35% des Gewichts in der Kerze enthalten ist.

Die Aufgabe hinsichtlich der Kerze ist weiter beim Gegenstand des Anspruches 8 gelöst, wobei darauf abgestellt ist, dass der Anteil an Riechstoff in der Kerze größer als 3 Gewichtsprozent ist und die Kerze einen Anteil an einem Ester und/oder einem Ester-Wachssäuregemisch aufweist.

Hinsichtlich des Esters kann es sich beispielsweise um Triglycerid handeln.

Es ist erkannt worden, dass flüssige oder ölige Riechstoff-Substanzen, wie insbesondere ätherische Öle, in einfacher Weise dadurch verfestigt werden können, dass Sie in einen Ester eingebracht werden. Dieser Ester kann sich einzeln oder als Mischung aus Bestandteilen wie Palmöl, Palmstearin, Palmkernöl, Rapsöl oder tierischem Talg zusammensetzen. Der hier verwendete Begriff "Riechstoff" umfasst nicht nur die Naturprodukte, wie etwa ätherische Öle, sondern auch die synthetisch produzierten Duft- und Riechstoffe.

Ein wie vorstehend gewonnenes Riechstoffkonzentrat, also eine Lösung von einem Riechstofföl oder einer Riechstoffflüssigkeit in einem Ester, liegt sodann in fester Form vor. In den physikalischen Eigenschaften entspricht ein solchermaßen gewonnenes Riechstoffkonzentrat etwa einem Gemisch von 80 % pastenförmigen Paraffin mit etwa 20% Palmöl, insbesondere einem solchen Palmöl, das bei etwa 30°C eine Penetration von 6 mm⁻¹ aufweist. Insgesamt hat dann ein solches Riechstoffkonzentrat die Eigenschaft eines wachsartigen Stoffes mit einem gegenüber dem Ölanteil wesentlich erhöhten Erstarrungspunkt von etwa 37°C und einer Penetration bei 30°C von ca. 130 mm⁻¹. Das Riechstoffkonzentrat liegt in fester Form vor.

Der Riechstoffanteil in der oben genannten Lösung kann mehr als 10 Gew.-% und bis zu 80 Gew.-% betragen.

Im Weiteren ist es auch bevorzugt, dass bis zu 50 Gew.-% der Lösung aus einem Mikrowachs bestehen. Mikrowachse sind bekanntlich wie Paraffin Gemische aus unterschiedlichen Kohlenwasserstoffen, jedoch enthalten sie überwiegend Isoparaffine. Überraschend hat sich gezeigt, dass die Mikrowachse das Kristallisationsverhalten der Ester, insbesondere der Triglyceride vorteilhaft beeinflussen. Insbesondere sind hier Mikrowachse angesprochen, die einen Erstarrungspunkt im Bereich von 68°C bis 64°C aufweisen, bei einem Anteil an Isoparaffinen von mehr als 75% und einem Ölgehalt von größer als 3,5%.

Ein so gewonnenes Riechstoffkonzentrat kann in einfacher Weise in Paraffin eingebracht werden. Es kann beispielsweise hinsichtlich der Pulverpresstechnologie in kleine, pulverartige Bestandteile zerlegt werden und mit der Paraffin-Pulvermasse vor dem Verpressen vermischt werden, derart, dass es zu einer weitgehend homogenen Verteilung der Duftstoffe in einer solchermaßen dann hergestellten Kerze kommt. In dem genannten Konzentrat wird ein Anteil von Duftstoffen von bis zu 60% erreicht. Hierbei wird von einem Gewichtsanteil ausgegangen.

Das genannte Riechstoffkonzentrat ist nicht nur bei pastenförmigen Kerzengrundstoffen einsetzbar, sondern grundsätzlich bei allen Kerzenrohstoffen. Insbesondere bei solchen Paraffinen bzw. Stoffen auf Basis von Paraffin mit einem Schmelzpunkt bis zu 105°C und/oder einem Paraffin-Anteil von mindestens 75%.

Hinsichtlich des Riechstoffkonzentrats ist es weiter im Unterschied zu Vorstehendem bevorzugt, dass dieses auch in flüssiger Form in die flüssige Kerzengrundmasse eingebracht wird und anschließend gemeinsam mit dieser Kerzengrundmasse zu einem Pulver versprüht wird. Das Riechstoffkonzentrat kann auch über die vorgenannten 60% hinaus einen Anteil von bis zu 60 Gew.-% an Parfümöl besitzen. Dies entspricht bis zu 35% (Gew.-%) an Riechstoffen in dem fertigen Produkt, der Kerze.

In der Erfindung wird ein Riechstoffkonzentrat verwendet, welches einen Anteil an einem Ester enthält, wie insbesondere einem solchen auf Basis von Triglyceriden, wie beispielsweise Palmöl, Palmstearin, Palmkernöl, Rapsöl, tierischer Talg und/oder einem Ester-Wachssäuregemisch, in welchem Riechstoffkonzentrat ein Riechstoff, insbesondere ein Riechstofföl, wie bspw. ein ätherisches Öl, enthalten ist. Es kann auch ein Ester-Wachssäuregemisch enthalten sein, welches sich als Mischung zusammensetzen kann aus Fettsäureglyzeriden, Wachssäureester, Montanwachsen oder dergleichen. Der Anteil von Riechstoffen bzw. Riechstoffölen an dieser Mischung kann zwischen 20 und 80% liegen, vorzugsweise bei einem Drittel bis zwei Drittel, bezogen auf das Gewicht. Es ist auch in weiterer Ausgestaltung bevorzugt, dass der nach dem Riechstoff verbleibende Anteil von ein Drittel bis zwei Drittel bezogen auf das Gewicht, bis zu 50% aus einem Mikrowachs (mikrokristallinem Wachs bzw. Paraffin) besteht. Hinsichtlich des Begriffes Mikrowachse wird auch auf die Ausführungen weiter oben verwiesen. Die Riechstoffe bzw. das Riechstofföl ist bevorzugt in dem Ester bzw. den genannten Modifikationen und/oder dem Anteil an Mikrowachs gelöst.

Gegenstand der Erfindung ist auch ein Gegenstand auf Paraffinbasis mit einem hohen Riechstoffanteil. Beispielsweise eine Kerze. Dieser Gegenstand zeichnet sich dadurch aus, dass er aus einem wachsartigen Stoff mit einem Anteil aus organischem Ester und/oder einem Ester-Wachssäuregemisch besteht, wobei der Paraffinanteil als solcher einen Erstarrungspunkt von 55°C oder weniger aufweist und der Ester-Anteil als solcher einen Erstarrungspunkt von 35°C oder mehr, und wobei darüber hinaus ein Riechstoffanteil von 3% oder mehr, insbesondere 5% oder mehr, bezogen auf das Gewicht, in dem Gegenstand enthalten ist. Als derzeit bevorzugte Obergrenze kann 35% angegeben werden. Hinsichtlich des Paraffins spricht man hier auch von niedriggrätigem Paraffin. Der genannte Paraffinanteil besitzt in dem Temperaturbereich des Erstarrungspunktes von 55°C oder weniger eine sehr geringe Härte. Bei ca. 40°C liegt beispielsweise nur noch ein pastenartiger Stoff vor. Dagegen besitzt der Anteil an organischem Ester oder dem Ester-Wachssäuregemisch bereits bei Temperaturen von 30°C oder weniger eine sehr beachtliche Härte. Beispielsweise weisen sowohl gehärtetes Palmöl als auch gehärteter Rinderspeisetalg, beides Stoffe, welche unter die genannten Begriffe fallen, bei 30°C eine Penetration von 6 mm⁻¹ auf. Mit dem Begriff "Paraffin" ist hier auf technisches Paraffin abgestellt, welches bekanntlich aus Erdöl, Teeren, in einer Teilsynthese oder auch mittels der Fisch-Tropsch-Synthese gewonnen wird. Es handelt sich üblicherweise um Gemische, bestehend aus n-Alkanen und iso-Alkanen unterschiedlicher C-Kettenlängen, und bei den iso-Alkanen zusätzlich unterschiedlicher Strukturen. Weiter kann der Gegenstand einen Anteil an Mikrowachsen enthalten. Der Anteil an Mikrowachs (siehe hierzu auch Ausführungen weiter oben) kann an dem Gegenstand also bspw. der Kerze bis zu 30% betragen. Überraschend hat sich gezeigt, dass die vorstehend angegebene Mischung von Paraffin mit einem organischen Ester und/oder Ester-Wachssäuregemisch und/oder einem Anteil an Mikrowachs zu einem wachsartigen Stoff führt, der einerseits eine für die angestrebten Produkte noch akzeptable Härte aufweist, andererseits aber auch ein sehr gutes Aufschmelzverhalten zeigt. Dadurch, dass der Ester-Anteil bzw. der Anteil an Mikrowachs für sich einen hohen Anteil an Riechstoffen aufweist, beispielsweise bis zu 60%, und er des weiteren homogen in der Kerze oder dem aus Paraffin hergestellten Gegenstand verteilt ist, hat dieser Gegenstand insgesamt einen relativ hohen Riechstoffanteil, der homogen darin verteilt ist. Mikroskopisch gesehen kann aber auch festgehalten werden, dass der Riechstoffanteil in dem Ester und/oder dem Mikrowachs konzentriert ist. Der Paraffinanteil kann insbesondere aus einem Gemisch von iso-Paraffinen und n-Paraffinen bestehen. Innerhalb dieses Gemisches beträgt der iso-Anteil mindestens 50 % mit einer C-Kettenlänge von C 16 bis C 45 und einem Maximum zwischen C 26 und C 34. Dieser Paraffinanteil besitzt einen Erstarrungspunkt von vorzugsweise unterhalb 45°C. Bei den genannten Estern bzw. Ester-Wachssäuregemischen handelt es sich bevorzugt auch um Triglyceride. Es können Kerzen hergestellt werden, welche bei großen Abmessungen im Querschnitt zu einem einheitlichen Aufschmelzverhalten über den Querschnitt führen. Sie weisen danach ein vorteilhaftes Abbrennverhalten auf. Im Einzelnen kann der Anteil an organischen Ester und/oder an Ester-Wachssäuregemisch in dem wachsartigen Stoff sich einzeln oder als Mischung zusammensetzen aus dem bereits genannten Palmöl, weiter aus Palmstearin, Palmkernöl, Rapsöl, tierischen Talgen usw. Die Verbindungsklasse der Ester-Wachssäuregemische beinhaltet insbesondere auch Montanwachse, Bienenwachs, Carnaubawachs usw. Es handelt sich hier um langkettige Ester. Von Bedeutung ist, dass sowohl die organischen Ester als auch die Ester-Wachssäuregemische ein hohes Ölbindevermögen besitzen. Dies ist jedoch im Einzelnen jeweils unterschiedlich ausgebildet. Diese Eigenschaft der genannten Stoffklassen ist im Hinblick auf den hier beschriebenen Stoff besonders vorteilhaft, da der Paraffinanteil mit einem Erstarrungspunkt von 55°C oder weniger einen gewissen, mit abnehmenden Erstarrungspunkten zunehmenden, Ölanteil aufweist. Der Paraffinanteil kann einen Erstarrungspunkt hinunter bis zu etwa 30°C aufweisen. Bevorzugt ist ein Erstarrungspunkt des Paraffinanteils im Bereich von 30°C bis 45°C. Der Anteil von Paraffin in dem hier beschriebenen wachsartigen Stoff liegt bevorzugt im Bereich von 45 bis 95 %.

Hinsichtlich der Stoffgruppe der organischen Ester können beispielsweise Fettsäureglyceride, Wachssäureester oder auch die genannten Montanwachse zum Einsatz kommen. Die organischen Ester bzw. Montanwachse können auch angeseift sein.

### Beispiele:

Es wurde ein Paraffin mit einem gewissen Ölgehalt, mit einem Erstarrungspunkt von 36°C mit gehärtetem Palmöl versetzt, wobei das gehärtete Palmöl einen Anteil eines ätherischen Öles von 30% aufwies. Während der Paraffinanteil allein pastenförmigen Charakter besaß, zeigte sich nach der Mischung mit dem gehärteten Palmöl, welches bei 30°C eine Penetration von etwa 6 mm⁻¹ aufweist, in einem Verhältnis von 1:1, eine Penetration bei 30°C von etwas weniger als 46 mm⁻¹.

Bei einem weiteren Versuch wurde anstatt gehärtetem Palmöl Rinderspeisetalg zugesetzt. Es ergab sich bei einem gleichen Mischungsverhältnis und einem gleichen Anteil an Riechstoff eine Penetration von etwas weniger als 43 mm⁻¹. Dagegen haben sich in beiden Fällen die Erstarrungspunkte des erhaltenen wachsartigen Stoffes nur geringfügig gegenüber dem Erstarrungspunkt des Paraffin-Ausgangsproduktes erhöht. Während das Paraffin-Ausgangsprodukt einen Erstarrungspunkt von etwa 36°C aufweist, wies die Mischung aus 50% Paraffinanteil und 50% gehärtetem Palmöl einen solchen von 39°C auf. Die Mischung aus 50% Paraffinanteil und 50% gehärtetem Rinderspeisetalg wies einen solchen von 40°C auf.

Weiter wurde ein Triglycerid mit einem Erstarrungspunkt von etwa 50°C und einer Penetration von 6 ⁻¹mm bei 30°C mit einem gleichen Anteil an Mikrowachs mit einem Erstarrungspunkt von 71,5°C und einer Penetration von 79 ⁻¹mm gemischt. Die Mischung erfolgt bei ca. 80°C, also im flüssigen Zustand beider Anteile. Der so erhaltene Mischstoff, welchem dann im Folgenden die Riechstoffe in einer gewünschten Menge zugegeben werden, besitzt einen Erstarrungspunkt von ca. 67°C bis 70°C und eine Penetration von 21 ⁻¹mm bei 25°C. Im Konkreten kann man einem solchen Stoffgemisch dann nochmals einen gleichen Anteil eines flüssigen Riechstoffes (Citrone) zufügen. Es stellt sich dann bezüglich dieses mit Riechstoff vermischten Trägermaterials ein Erstarrungspunkt von 65,5°C und eine Penetration von 71 ⁻¹mm bei 25°C ein.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) sowie der Inhalt der Stammanmeldung, WO97/48784, vollinhaltlich mit einbezogen, auch zu dem Zweck, Merkmale dieser Unterlagen in Ansprüche vorliegender Anmeldung mit aufzunehmen.

## Patentansprüche

1. Verfahren zur Herstellung einer Kerze aus einer Kerzengrundmasse auf Paraffinbasis, mit einem Riechstoffanteil, **dadurch gekennzeichnet, dass** zunächst zur Bildung eines Riechstoffkonzentrats ein Riechstoff in einem Lösungsmittel, das einen Ester enthält, gelöst wird, und das so erhaltene Riechstoffkonzentrat seinerseits der Kerzengrundmasse zugegeben wird, in einer Menge, dass der Riechstoff in einem Anteil von 3 bis 35% des Gewichts in der Kerze enthalten ist.

2. Verfahren nach Anspruch 1, **dadurch gekennzeichnet, dass** die Kerze im Pressverfahren hergestellt wird.

3. Verfahren nach Anspruch 1 oder 2, **dadurch gekennzeichnet, dass** der Riechstoff in der Kerze homogen verteilt wird.

4. Verfahren nach einem vorstehenden Ansprüche, **dadurch gekennzeichnet, dass** das Riechstoffkonzentrat nach dem Einbringen in die Kerzengrundmasse mit dieser zu einem Pulver versprüht wird.

5. Verfahren nach einem der vorhergehenden Ansprüche, **dadurch gekennzeichnet, dass** das Riechstoffkonzentrat in fester Form in die Kerzengrundmasse eingebracht wird.

6. Verfahren nach einem der vorhergehenden Ansprüche, **dadurch gekennzeichnet, dass** das Riechstoffkonzentrat in Pulverform in die Kerzengrundmasse eingebracht wird.

7. Verfahren nach einem der vorhergehenden Ansprüche, **dadurch gekennzeichnet, dass** die Kerzengrundmasse einen Anteil an Paraffin von 75% oder mehr aufweist.

8. Kerze mit einer Kerzengrundmasse auf Paraffinbasis, wobei die Kerze weiter einen Riechstoffanteil aufweist, **dadurch gekennzeichnet, dass** der Anteil an Riechstoff in der Kerze größer als 3 Gewichtsprozent ist und die Kerze einen Anteil an einem Ester und/oder ein Ester-Wachssäuregemisch aufweist.

9. Kerze nach Anspruch 8, **dadurch gekennzeichnet, dass** die Kerze im Pressverfahren hergestellt ist.

10. Kerze nach einem der Ansprüche 8 oder 9, **dadurch gekennzeichnet, dass** der Riechstoff einen Anteil an der Kerze von bis zu 35% bezogen auf das Gewicht aufweist.

11. Kerze nach einem der Ansprüche 8 bis 10, **dadurch gekennzeichnet, dass** der Riechstoff in der Kerze homogen verteilt ist.

12. Kerze nach einem der Ansprüche 8 bis 11, **dadurch gekennzeichnet, dass** die Kerzengrundmasse einen Anteil an Paraffin von 75% oder mehr aufweist.
